# EUROPÄISCHE PATENTSCHRIFT

(11) **EP 1 257 754 B1**
(45) Veröffentlichungstag und Bekanntmachung des Hinweises auf die Patenterteilung: **14.09.2005**
(21) Anmeldenummer: 01998758.5
(22) Anmeldetag: 22.11.2001
(51) Int. Cl.: F16J 15/32

(54) **DICHTELEMENT**
SEALING ELEMENT
ELEMENT D'ETANCHEITE

(30) Priorität: 30.11.2000 DE 10059759
(43) Veröffentlichungstag der Anmeldung: 20.11.2002
(73) Patentinhaber: ROBERT BOSCH GMBH, 70442 Stuttgart (DE)
(72) Erfinder: MEIER, Helmut, 77871 Renchen (DE); WOLFGARTEN, Sven, 77855 Oberachen (DE); MEYER, Christian, 76228 Karlsruhe-Wolfartsweiler (DE)
(86) Internationale Anmeldenummer: PCT/DE2001/004410
(87) Internationale Veröffentlichungsnummer: WO 2002/044597

(56) Entgegenhaltungen:
- DE-C- 917 942
- US-A- 2 867 457
- US-A- 4 015 883
- US-A- 4 026 563

## Beschreibung

### Stand der Technik

Die Erfindung betrifft ein Dichtelement zum Abdichten einer Achse gegen einen sich auf dieser Achse befindenden Körper, insbesondere eine Scheibe nach der Gattung der unabhängigen Ansprüche.

Mit der EP 0 860 572 ist eine Antriebsvorrichtung für Abdeckglieder von Öffnungen in Fahrzeugen, wie z.B. Fensterscheiben oder Schiebedächer, bekannt geworden, die ein Dichtelement zum Abdichten einer Achse gegen ein Abtriebsrad aufweist. Dabei ist auf einer drehfesten Achse im Getriebegehäuse ein von einer Schnecke angetriebenes Abtriebsrad gelagert, das eine bauliche Einheit mit einer Seiltrommel bildet. Das Abtriebsrad ist an seinem äußeren Rand gegen die Wand des Getriebegehäuses abgedichtet und bildet gleichzeitig eine Art Deckel für das Getriebegehäuse. Das Abtriebsrad ist mit einem in eine Nut der Achse eingesetzten Sprengring axial fixiert und mittels eines Radialdichtrings zur festen Achse hin abgedichtet.

Mit der US 4,015,833 ist ein ringförmiges Dichtelement zur Abdichtung eines Kugellagers bekannt geworden. Dabei wird eine am Dichtelement angeformte Dichtlippe mittels eines Federrings gegen eine Achse gepresst, während sich eine zylinderförmige Außenwand des Dichtelements an einem äußeren Lagerring abstützt. Das Dichtelement ist hierbei aus Gummi gefertigt, wobei in seinem Innern ein L-förmiges Abstützelement angeordnet ist.

Für den Einsatz im Kraftfahrzeug ist es wichtig, daß die Getriebe-Antriebseinheit gegenüber eindringendem Wasser und Schmutz dicht ist. Dazu bildet der - gewöhnlich mit einem Versteifungsring stabilisierte - Radialdichtring mit seiner Innenwand eine gemeinsame Dichtfläche mit der Oberfläche der Achse, und mit seiner Außenwand eine gemeinsame Dichtfläche mit der Außenwand der Nut im Abtriebsrad. Ist nun das Abtriebsrad aus einem Material mit hohem Temperaturausdehnungskoeffizienten gefertigt, so lässt die Dichtwirkung bei hohen Temperaturen deutlich nach, oder der Dichtring löst sich vollständig von der zu dichtenden Fläche. Die Ursache hierfür liegt darin, dass der Radialdichtring bei der starken thermischen Ausdehnung des Nutumfangs keine ausreichenden Anpresskräfte auf die Dichtflächen aufbringen kann. Versucht man das Problem durch die Verwendung eines Vollgummidichtrings zu lösen, erfährt der Dichtring keine ausreichende Führung auf der Achse, was ebenfalls zur Undichtheit des Systems führt. Versuche, versteifte Radialdichtringe mit größerem Außendurchmesser im Neuzustand unter starker Überpressung einzusetzen, scheitern daran, dass dabei die Gummiummantelung des Dichtrings an der Außenwand der Nut abgeschert wird.

### Vorteile der Erfindung

Die erfindungsgemäße Vorrichtung mit den Merkmalen des Anspruchs 1 hat den Vorteil, dass der Körper, im folgenden als Scheibe bezeichnet, gegen eine Achse auch beim Auftreten eines extrem breiten Toleranzbandes abgedichtet wird. Die Dichtung ist auch dann noch zuverlässig gewährleistet, wenn die beiden Dichtpartner im Temperaturgang stark unterschiedliche Temperaturausdehnungen aufweisen. Außerdem erfordert das erfindungsgemäße Dichtelement keine zusätzlichen Bauteile, komplizierte Werkzeuge oder zusätzliche Montageschritte. Durch das erfindungsgemäße Verhältnis des Außendurchmessers des Versteifungsrings zum Außendurchmesser der elastischen Ummantelung von 10 : 11 bis 10 : 15 wird das Dichtelement im Neuzustand unter relativ hoher Pressung eingebaut, erzielt aber auch unter hoher Temperaturlast und zunehmendem Verschleiß bei niedrigerer Pressung noch ausreichende Dichtheit. Durch den breiten Gummirücken der Ummantelung steht genügend elastisches Material zur Verfügung, um die zunehmenden Zwischenräume zwischen den abzudichtenden Bauteilen auszufüllen, wobei die axiale Führung durch den Versteifungsring gewährleistet ist. Aufgrund des größeren Abstandes zwischen dem Außendurchmesser des Versteifungsrings und der Außenwand der Nut wird die äußere Ummantelung beim Einpressen nicht mehr abgeschert. Somit wird über die gesamte Lebensdauer des Dichtelements das Eindringen von nassen oder trockenen Medien in den abzudichtenden Raum wirksam verhindert. Unabhängig vom absoluten Durchmesser der Achse oder der Nut in der Scheibe werden diese Vorteile bei einer Wahl des Verhältnisses der Außendurchmesser zwischen Versteifungsring und Gummiummantelung von 10 : 11 bis 10 : 13 bei noch breiterem Toleranzband bzw. noch höheren Temperaturen erzielt.

Durch die in den Unteransprüchen aufgeführten Merkmale sind vorteilhafte Weiterbildungen der Vorrichtung nach Anspruch 1 möglich. Die erfindungsgemäße Vorrichtung mit den Merkmalen des abhängigen Anspruchs 2 ist besonders vorteilhaft für den Einsatz in Verstellantrieben im Kraftfahrzeug. Die Wahl der Dicke der elastischen Ummantelung, insbesondere einer Gummiummantelung, von 0,5 bis 3 mm garantiert hier eine zuverlässige Dichtwirkung zwischen der Achse und der sich auf dieser befindenden Scheibe mit breiten Toleranzbändern selbst unter Schüttelbeanspruchung. Die beanspruchte Dicke der Ummantelung gewährt einerseits ausreichende Führung und Symmetrie bei Unwuchten der Scheibe (optimale Dicke hierfür 0,5 mm), andererseits maximalen Toleranzausgleich, auch bei großen Temperaturausdehnungen (optimale Dicke hierfür 3,0 mm). Einen idealen Kompromiss dieser beiden Anforderungen erzielt man bei einer Dicke der elastischen Ummantelung von 1,0 mm.

Liegt das Verhältnis von Breite zu Dicke der elastischen Ummantelung in deren äußerem Bereich zwischen 6 : 1 und 2 : 1, erhält man eine gute Haftung zwischen der Außenfläche des Dichtelements und der Wand der Nut. Außerdem wird ein Verkippen des Dichtelements verhindert und eine langzeitige Dichtheit gewährleistet, auch bei ungleichmäßiger Belastung und hohen Temperaturschwankungen. Besonders effektiv ist hierbei ein Verhältnis zwischen 4 : 1 und 2 : 1, für die Anwendung in Stellantrieben im Kraftfahrzeug hat sich ein Verhältnis von 3 : 1 als ideal erwiesen.

Von besonderer Bedeutung sind die Vorteile der hohen mechanischen und thermischen Belastbarkeit für ein sich auf der Achse drehendes Rad, da hier durch die Reibung hohe Temperaturausdehnungen und Abrieb am Dichtelement auftreten, die durch das Dichtelement ausgeglichen werden.

Die Verwendung von Material mit hohem Temperaturausdehnungskoeffizienten, insbesondere unverstärktes POM, für die Herstellung von Abtriebsrädern, ist vorteilhaft bezüglich der Ausformung, des Zahneingriffs oder der Gleiteigenschaften auf der Achse. Die weiten Einsatzmöglichkeiten dieser Materialien werden dadurch ermöglicht, dass die erfindungsgemäße Dichtung deren große Temperaturausdehnung kompensiert und die beiden Bauteile über einen großen Temperaturbereich wirkungsvoll abdichtet.

Besonders günstig ist es, wenn die Verpressung der äußeren elastischen Ummantelung bei der Montage zwischen 10 und 40 % beträgt. Dadurch ist gewährleistet, dass sowohl im neuen kalten Zustand als auch im hohen Temperaturbereich nach gewissen Abnutzungserscheinungen die Anpreßkräfte des Dichtelements immer noch ausreichen, um die Scheibe abzudichten. Am zuverlässigsten ist dies bei einer Verpressung zwischen 20 und 30 % gewährleistet.

Weist die Außenfläche der elastischen Ummantelung und/oder die Dichtfläche der Scheibe eine Strukturierung auf, so können durch eine Materialumformung der Ummantelung in die Hohlräume der Strukturierung Druckspitzen im Betrieb ausgeglichen werden. Außerdem trägt diese Strukturierung zur besseren Haftung des Dichtelements in der Nut der Scheibe auch unter Schüttelbeanspruchung und Langzeitabnutzung bei.

Von Vorteil ist eine topfförmige Ausbildung des Versteifungsrings im Innern des Dichtelements, da hierdurch eine ausreichende Anpreßkraft der elastischen Ummantelung gegen die Außenwand der Nut erreicht wird. Andererseits stützt sich der Versteifungsring mittels einer kreisrunden Aussparung im Topfboden umlaufend an der Achse ab, wodurch eine gute Führung und Zentrierung des Dichtelements realisiert wird.

Besonders günstig erweist sich die Herstellung des Dichtelements, indem ein Versteifungsring aus Metall, beispielsweise Edelstahl, mit einem technischen Gummiwerkstoff, insbesondere HNBR, umspritzt wird. Diese Kombination gewährt eine optimale Haftung der Ummantelung auf dem Versteifungsring bei minimalen Herstellungskosten. Außerdem gewährt diese Materialkombination eine optimale Dichtwirkung auch im Einsatz bei hohen Temperaturen, breiten Toleranzbändern und unter Langzeiteinsatz.

Weist die abzudichtende Scheibe einen Luftkanal auf, dessen eines Ende in die Nut der Scheibe mündet, kann mit dem erfindungsgemäßen Dichtelement gleichzeitig auch dieser Luftkanal abgedichtet werden, ohne daß zusätzliche Bauteile oder Montageschritte notwendig sind.

### Zeichnung

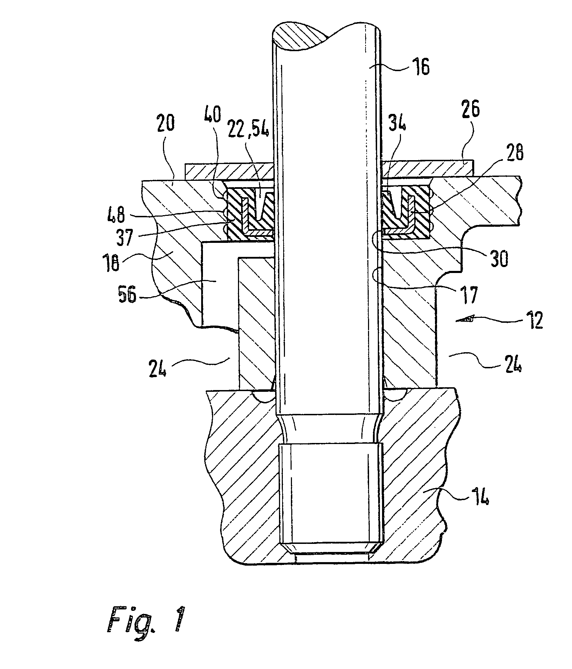

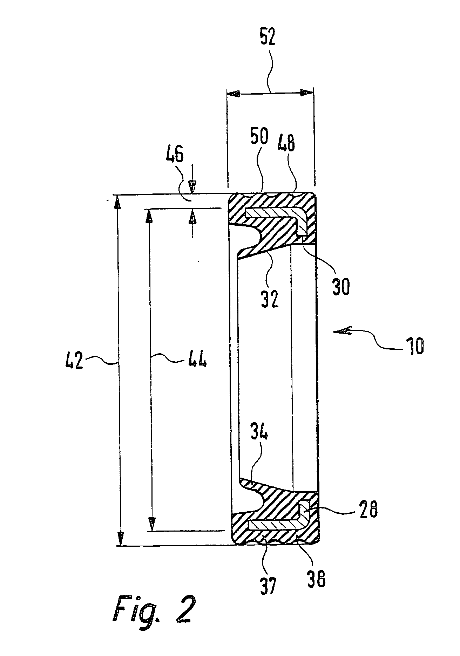

In der Zeichnung ist ein Ausführungsbeispiel einer erfindungsgemäßen Vorrichtung dargestellt und in der nachfolgenden Beschreibung näher erläutert. Es zeigen Figur 1 ein Ausführungsbeispiel eines Dichtelements in eingebautem Zustand im axialen Schnitt und Figur 2 das gleiche Ausführungsbeispiels im nicht eingebauten Zustand in einer Vergrößerung.

### Beschreibung

Das in Figur 1 dargestellte Ausführungsbeispiel zeigt ein erfindungsgemäßes Dichtelement 10, das in eine Getriebeantriebseinheit 12 eingebaut ist. In einem Getriebegehäuse 14 ist drehfest eine Achse 16 eingespritzt. Auf der Achse 16 ist ein eine Achsöffnung 17 aufweisendes Abtriebsrad 18 gelagert, das beispielsweise von einer nicht dargestellten, von einem Motor angetriebenen Schnecke angetrieben wird. Das Abtriebsrad 18, eine spezielle Ausformung eines Körpers beziehungsweise einer Scheibe, bildet gleichzeitig eine Art Deckel 20 des Getriebegehäuses 14 und ist in seinem äußeren Bereich gegenüber der Wand des Getriebegehäuses 14 abgedichtet (nicht abgebildet). Um die Achsöffnungen 17 des Abtriebsrads 18 ist eine Nut 22 als Formsitz 54 ausgeformt, in der als Dichtelement 10 ein Radialdichtring 10 eingefügt ist. Die Innenwand der Nut 22, die auch als Senkung 22 bezeichnet werden kann, wird von der Oberfläche der Achse 16 gebildet. Der Radialdichtring 10 dichtet das Abtriebsrad 18 gegen die Achse 16 ab, um das Eindringen von Feuchtigkeit und Schmutz in den Innenraum 24 des Getriebegehäuses 14 zu verhindern. Das Abtriebsrad 18 wird mittels eines Sicherungsrings 26, auf den eine nicht dargestellte Speednut wirkt, axial gesichert. Der Radialdichtring 10 weist einen topfförmigen, beispielsweise aus Edelstahl gefertigt, Versteifungsring 28 auf, der sich mit einer kreisförmigen Aussparung 30 am Boden des Topfes gegen die Achse 16 abstützt. Der Versteifungsring 28 ist komplett mit einem Gummiwerkstoff umspritzt. An seiner Innenseite 32 ist eine Dichtlippe 34 angeformt, die sich auf ihrem gesamten Umfang an die Oberfläche der Achse 16 anlegt. An der Außenseite 50 des Dichtringes 10 bildet die elastische Ummantelung 37 einen Gummirücken 38, mit dem das Dichtelement 10 gegen die Wand 40 der Nut 22 gepreßt wird.

Damit das Dichtelement 10 das Abtriebsrad 18 gegen die Achse 16 auch unter den Bedingungen eines sehr breiten Toleranzbandes, hoher Temperaturausdehnung und Dauerbeanspruchung wirksam abdichtet, werden die erfindungsgemäßen Anforderungen an die Ausformung des Dichtelements 10 gestellt. Hierzu sind in der vergrößerten Darstellung in Figur 2 die Abmessungen des Dichtelements 10 dargestellt. So liegt das Verhältnis des Außendurchmessers 42 der elastischen Ummantelung 37 zum Außendurchmesser 44 der topfförmigen Versteifung 28 im Bereich zwischen 10 : 11 und 10 : 15, für einen guten Kompromiß zwischen guter axialer Führung des Dichtelements 10 und Ausgleich eines breiten Toleranzbandes im Bereich zwischen 10 : 11 und 10 : 13. Die Dicke 46 der elastischen Ummantelung im äußeren Bereich wird gemessen zwischen dem Außendurchmesser 44 des Versteifungsrings 28 und dem größten Durchmesser 42 einer eventuellen Strukturierung 48 der Außenseite 50 des Dichtelements 10 und beträgt 0,5 bis 3 mm, insbesondere 0,8 bis 1,5 mm und vorzugsweise in etwa 1,0 mm. Die Breite 52 der elastischen Gummiummantelung 37 entspricht der Breite des gesamten Dichtelements 10. Zur Realisierung einer ausreichenden Anpreßkraft und einer ausreichenden Führung unter oben genannten Bedingungen beträgt das Verhältnis der Breite 52 zur Dicke 46 der elastischen Gummiummantelung im äußeren Bereich zwischen 6 : 1 und 2 : 1, insbesondere zwischen 4 : 1 und 2 : 1, bevorzugt in etwa 3 : 1.

An der Außenseite 50 weist das Dichtelement 10 eine Strukturierung 48 auf, um beim Auftreten von Druckspitzen diese mittels Materialverformung in die korrespondierenden Lücken auszugleichen. In einer Variation des Ausführungsbeispiels ist die Außenseite 50 glatt geformt und die Nut 22 des Abtriebsrades 18, die als Formsitz 54 ausgeformt ist, weist eine entsprechende Strukturierung auf. Auch die Kombination zweier Strukturierungen 48 ist möglich.

Im Ausführungsbeispiel ist das Abtriebsrad 18 aus unverstärktem POM und die Achse 16 aus Edelstahl gefertigt. Dadurch dehnt sich der Formsitz 54 des Abtriebsrads 18 bei hohen Temperaturen viel stärker aus als der Durchmesser der Achse 16. Dadurch verändern sich die Toleranzen dieser beiden Bauteile in Abhängigkeit der Temperatur sehr stark. Um dieses breite Toleranzband auszugleichen, wird die elastische Ummantelung 37 des Dichtelements 10 bei der Montage im kalten Zustand zwischen 10 und 40 %, insbesondere zwischen 20 und 30 % verpreßt. Durch die erfindungsgemäße Ausformung der elastischen Gummiummantelung 37 und den Materialanforderungen des Dichtelements 10 ist gewährleistet, daß das Dichtelement 10 auch nach einem gewissen Verschleiß, bei hohen Temperaturen und Schüttelbeanspruchung weiterhin fest in den Formsitz 54 gepreßt wird. Die Strukturierung 48 der Außenseite 50 und/oder der Wand 40 der Nut 22 unterstützt den Effekt der besseren Haftung beim Auftreten großer Toleranzen. Die elastische Ummantelung 37 ist aus einem technischen Gummiwerkstoff, insbesondere HNBR, und der Versteifungsring aus Metall gefertigt. Diese Werkstoffkombination gewährleistet eine gute Haftung der Ummantelung 37 auf dem Versteifungsring 28 und dichtet das System auch bei höheren Temperaturen gut ab.

Wie in Figur 1 dargestellt, weist das Abtriebsrad 18 einen Luftkanal 56 auf, über den vor der Montage des Dichtelements 10 der Innenraum 24 mit einem Druck beaufschlagt werden kann. Auf diese Weise kann beispielsweise die Dichtheit des Getriebegehäuses 14 überprüft werden. Das Dichtelement 10 ist so ausgeformt und angeordnet, daß es mit dem Abdichten des Abtriebsrads 18 gegen die Achse 16 gleichzeitig den Luftkanal 56 abdichtet.

Die exakte Dicke und Breite des Versteifungsrings 28 und der Dichtlippe 34 sind für das erfindungsgemäße Dichtelement 10 nicht so entscheidend und können daher leicht variieren. Das erfindungsgemäße Dichtelement 10 ist für den Einsatz in Getriebe-Antriebseinheiten 12 von Stellantrieben im Kraftfahrzeug optimiert, kann aber ebensogut in anderen Systemen eingesetzt werden, bei denen eine drehbare Scheibe 18 gegen eine Achse 16 abgedichtet wird. Eine weitere Anwendungsmöglichkeit des erfindungsgemäßen Dichtelements 10 stellt die Drehung einer Achse 16 in einer fest fixierten Scheibe 18, oder andersartig geformten Körper 18, dar.

## Patentansprüche

1. Dichtungsanordnung mit einem Dichtelement (10) zum Abdichten einer Achse (16) gegen einen sich auf dieser Achse (16) befindenden Körper, insbesondere eine Scheibe (18), mit einem von einer elastischen Ummantelung (37) im wesentlichen umhüllten Versteifungsring (28) und einer Innenfläche (32), an die eine Dichtungslippe (34) angeformt ist, die sich an die Achse (16) anlegt, **dadurch gekennzeichnet, dass** das Verhältnis des Außendurchmessers (44) des Versteifungsrings (28) zum Außendurchmesser (42) der elastischen Ummantelung (37) im Bereich zwischen 10 : 11 und 10 : 15, insbesondere zwischen 10 : 11 und 10 : 13. liegt.

2. Dichtungsanordnung nach Anspruch 1, **dadurch gekennzeichnet, dass** die Dicke (46) der elastischen Ummantelung (37) im äußeren Bereich 0,8 bis 1,5 mm, vorzugsweise in etwa 1,0 mm beträgt.

3. Dichtungsanordnung nach Anspruch 1 oder 2, **dadurch gekennzeichnet, dass** das Verhältnis der Breite (52) zur Dicke (46) der elastischen Ummantelung (37) im äußeren Bereich zwischen 6 : 1 und 2 : 1, insbesondere zwischen 4 : 1 und 2 : 1, bevorzugt in etwa 3 : 1 beträgt.

4. Dichtungsanordnung nach einem der Ansprüche 1 bis 3, **dadurch gekennzeichnet, dass** der Körper, insbesondere die Scheibe (18), ein drehbar auf der Achse (16) gelagertes Rad (18) ist.

5. Dichtungsanordnung nach einem der Ansprüche 1 bis 4, **dadurch gekennzeichnet, dass** der Temperaturausdehnungskoeffizient des Materials, insbesondere unverstärktes POM, des Körpers, insbesondere der Scheibe (18),deutlich größer ist, als der der Achse (16).

6. Dichtungsanordnung nach einem der Ansprüche 1 bis 5, **dadurch gekennzeichnet, dass** die Verpressung der äußeren elastischen Ummantelung (37) bei der Montage im Bereich zwischen 10 % und 40 %, insbesondere zwischen 20 % und 30% liegt.

7. Dichtungsanordnung nach einem der Ansprüche 1 bis 6, **dadurch gekennzeichnet, dass** die Außenseite (50) der elastischen Ummantelung und/oder die Dichtfläche (40) des Körpers, insbesondere der Scheibe (18), eine Strukturierung (48) zum Ausgleich von Druckspritzen und zur besseren Haftung aufweist.

8. Dichtungsanordnung nach einem der Ansprüche 1 bis 7, **dadurch gekennzeichnet, dass** der Versteifungsring (28) zur Zentrierung des Dichtrings (10) auf der Achse (16) topfförmig ausgebildet ist.

9. Dichtungsanordnung nach einem der Ansprüche 1 bis 8, **dadurch gekennzeichnet, dass** die elastische Ummantelung (37) aus einem technischen Gummiwerkstoff, insbesondere HNBR, und der Versteifungsring (28) aus Metall gefertigt ist.

10. Dichtungsanordnung nach einem der Ansprüche 1 bis 9, **dadurch gekennzeichnet, dass** der Körper, insbesondere die Scheibe (18), einen Luftkanal (56) zur Druckbeaufschlagung eines Innenraums (24) aufweist, der gleichzeitig mit dem Abdichten des Körpers, insbesondere der Scheibe (18), gegen die Achse (16) durch das Dichtelement (10) nach außen abdichtbar ist.

## Claims

1. Sealing arrangement with a sealing element (10) for sealing an axle (16) with respect to a body located on this axle (16), in particular a disc (18), with a stiffening ring (28), which is essentially enveloped by an elastic casing (37), and an inner surface (32), on which there is formed a sealing lip (34) which comes to bear against the axle (16), **characterized in that** the ratio of the outside diameter (44) of the stiffening ring (28) to the outside diameter (42) of the elastic casing (37) lies in the range between 10 : 11 and 10 : 15, in particular between 10 : 11 and 10 : 13.

2. Sealing arrangement according to Claim 1, **characterized in that** the thickness (46) of the elastic casing (37) in the outer region is 0.8 to 1.5 mm, preferably approximately 1.0 mm.

3. Sealing arrangement according to Claim 1 or 2, **characterized in that** the ratio of the width (52) to the thickness (46) of the elastic casing (37) in the outer region is between 6 : 1 and 2 : 1, in particular between 4 : 1 and 2 : 1, preferably approximately 3 : 1.

4. Sealing arrangement according to one of Claims 1 to 3, **characterized in that** the body, in particular the disc (18), is a wheel (18) rotatably mounted on the axle (16).

5. Sealing arrangement according to one of Claims 1 to 4, **characterized in that** the coefficient of thermal expansion of the material, in particular unreinforced POM, of the body, in particular of the disc (18), is significantly greater than that of the axle (16).

6. Sealing arrangement according to one of Claims 1 to 5, **characterized in that** the compression of the outer elastic casing (37) during assembly lies in the range between 10% and 40%, in particular between 20% and 30%.

7. Sealing arrangement according to one of Claims 1 to 6, **characterized in that** the outer side (50) of the elastic casing and/or the sealing surface (40) of the body, in particular of the disc (18), has a structuring (48) to compensate for pressure peaks and for better adhesion.

8. Sealing arrangement according to one of Claims 1 to 7, **characterized in that** the stiffening ring (28) is formed in a cup-shaped manner for the centring of the sealing ring (10) on the axle (16).

9. Sealing arrangement according to one of Claims 1 to 8, **characterized in that** the elastic casing (37) is produced from an industrial rubber material, in particular HNBR, and the stiffening ring (28) is produced from metal.

10. Sealing arrangement according to one of Claims 1 to 9, **characterized in that** the body, in particular the disc (18), has an air duct (56) for applying pressure to an interior space (24), which can be sealed with respect to the outside at the same time as the sealing of the body, in particular the disc (18), with respect to the axle (16) by the sealing element (10).

## Revendications

1. Dispositif d'étanchéité muni d'un élément d'étanchéité (10) pour rendre étanche un axe (16) par rapport à un corps se trouvant sur cet axe (16), notamment un disque (18), avec un frettage (28) enveloppé pour l'essentiel d'un revetement élastique (37) et d'une surface intérieure (32), sur laquelle une lèvre d'étanchéité (34) est formée et prend appui sur l'axe (16),
**caractérisé en ce que**
le rapport du diamètre extérieur (44) du frettage (28) sur le diamètre extérieur (42) du revetement élastique (37) se trouve dans la plage entre 10/ 11 et 10/ 15, notamment entre 10/ 11 et 10/ 13.

2. Dispositif d'étanchéité selon la revendication 1,
**caractérisé en ce que**
l'épaisseur (46) du revetement élastique (37) dans la zone extérieure est de 0,8 à 1,5 mm, de préférence environ 1,0 mm.

3. Dispositif d'étanchéité selon la revendication 1 ou 2,
**caractérisé en ce que**
le rapport de la largeur (52) sur l'épaisseur (46) du revetement élastique (37) dans la zone extérieure se situe entre 6/1 et 2/1, notamment entre 4/ 1 et 2/1, de préférence à environ 3/ 1.

4. Dispositif d'étanchéité selon l'une quelconque des revendications 1 à 3,
**caractérisé en ce que**
le corps, notamment le disque (18), est une roue (18) logée sur l'axe (16) de manière à pouvoir tourner.

5. Dispositif d'étanchéité selon l'une quelconque des revendications 1 à 4,
**caractérisé en ce que**
le coefficient de dilatation thermique du matériau, notamment le POM (plastique polyoxyméthylène) non renforcé, du corps, notamment du disque (18), est nettement plus grand que celui de l'axe (16).

6. Dispositif d'étanchéité selon l'une quelconque des revendications 1 à 5,
**caractérisé en ce que**
l'injection du revetement élastique extérieur (37) se trouve lors du montage dans la plage comprise entre 10 % et 40 %, notamment entre 20 % et 30 %.

7. Dispositif d'étanchéité selon l'une quelconque des revendications 1 à 6,
**caractérisé en ce que**
la face extérieure (50) du revetement élastique et/ou la surface d'étanchéité (40) du corps, notamment du disque (18), comportent une structure (48) destinée à équilibrer les pointes de pression et à améliorer l'adhérence.

8. Dispositif d'étanchéité selon l'une quelconque des revendications 1 à 7,
**caractérisé en ce que**
le frettage (28) destiné au centrage de la bague d'étanchéité (10) sur l'axe (16) est réalisé en forme de pot.

9. Dispositif d'étanchéité selon l'une quelconque des revendications 1 à 8,
**caractérisé en ce que**
le revetement élastique (37) est fabriqué à partir d'un matériau en caoutchouc technique, notamment le HNBR (caoutchouc nitrile hydrogéné), et le frettage (28) à partir de métal.

10. Dispositif d'étanchéité selon l'une quelconque des revendications 1 à 9,
**caractérisé en ce que**
le corps, notamment le disque (18), comporte un conduit de ventilation (56) destiné à la pressurisation d'un espace intérieur (24), qui peut etre rendu étanche vers l'extérieur simultanément avec l'étanchéification du corps, notamment du disque (18), par rapport à l'axe (16) à travers l'élément d'étanchéité (10).
